# EUROPEAN PATENT SPECIFICATION

(11) **EP 1 226 759 B1**
(45) Date of publication and mention of the grant of the patent: **14.10.2009**
(21) Application number: 02250320.5
(22) Date of filing: 17.01.2002
(51) Int. Cl.: A23C 9/15, A23C 20/00, A23C 9/18

(54) **Method for preparing solid milk product**
Verfahren zur Herstellung eines festen Milchprodukts
Procédé de préparation d'un produit laitier solide

(30) Priority: 29.01.2001 US 771858
(43) Date of publication of application: 31.07.2002
(60) Divisional application: 09150074.4
(73) Proprietor: Kraft Foods Global Brands LLC, Northfield, IL 60093 (US)
(72) Inventor: Smith, Gray F., Highland Park, Illinois 60035 (US); Hansen, Timothy S., Chicago, Illinois 60657 (US); Menaker, Todd J., Chicago, Illinois 60610 (US)
(74) Representative: Murray, Adrian D'Coligny

(56) References cited:
- EP-A- 0 090 775
- EP-A- 0 115 617
- EP-A- 0 340 857
- EP-A- 0 402 555
- EP-A- 0 997 073
- WO-A-97/21354
- US-A- 3 922 376
- US-A- 4 444 800
- US-A- 4 744 998
- US-A- 5 935 634

## Description

### Field of the Invention

The present invention generally relates to a method for preparing a solid milk product. More specifically, the present invention relates to a process for preparing a solid milk product having a moisture level of less than 40 percent and a fat/protein ratio of less than 2.5.

### Background of the Invention

Dairy products such as liquid milk which are high in protein can form an important part of a nutritious diet. Unfortunately, many people do not generally consume liquid milk in sufficient quantities for a number of reasons. Thus, there has been considerable effort to prepare milk-based products in solid form which are more convenient to consume.

Barta, United States Patent 4,497,834 (February 5, 1985) provided a simplified process for preparing a nutritious dairy-based product. This process involved condensing fatted or defatted milk to essentially the solids and moisture content desired in the final product, reducing the lactose content to below 15 percent, and then cooking the mixture to produce, upon cooling, a gel-like material. If desired, fat could be added to a level of 5 to 40 percent. The moisture content of the gel-like material was generally less than 50 percent. However, to achieve low moisture levels, Barta was required to add significant levels of fat. Based on the reported examples in Barta, for example, a 48 percent moisture level product would have a fat/protein ratio of 1.1; a 30 percent moisture level product would have a fat/protein ratio of 6.2; and a 15 percent moisture level product would have a fat/protein ratio of 19.6. Thus, Barta was only able to obtain relatively low moisture levels by significantly increasing the fat/protein ratios. Of course, such high fat/protein ratios result in a less desirable high-fat product, thereby significantly reducing the nutritional characteristics of the product.

Cillario, U.S. Patent 4,298,625 (November 3, 1981) provided a low moisture foam consisting of an oil-in-water emulsion prepared from edible fat, milk proteins, water, and optionally added sugars. Cillario was able to produce both "creamy" (i.e., viscosity of 400,000 cps ( 400 Pa-sec)) and "paste-like (i.e., viscosity of 3,500,00 cps ( 3,500 Pa-sec)) products with moisture levels of 17 to 35 percent Fat/protein ratios for both the creamy and paste-like products generally ranged from 3.9 to 12, with the "optimum" ratios reported at 7 to 7.5. Of course, such high fat/protein ratios result in a less desirable high-fat product, thereby significantly reducing the nutritional characteristics of the product.

Moran et al, European Patent 997,073 provided a two stage, on-demand, commercially-viable method for producing process cheese or process cheese-type products by the direct conversion of milk. This method does not require fermentation, enzymatic treatment, and/or intermediate steps of forming and separating curds and whey. In the first stage, a powdered milk protein concentrate is formed by ultrafiltering liquid milk, preferably skim milk, and then spray drying the concentrated ultrafiltered milk. The powdered milk protein concentrate, which is storage-stable, may be converted to process cheese or a process cheese-type product immediately or may be stored for later conversion. The powdered milk protein concentrate can be used to produce fat-free, reduced or low-fat, and/or full-fat cheeses having similar organoleptic properties to cheeses prepared from conventional curds and whey processes. The two stage process is especially adapted for semi-continuous or continuous manufacture of process cheese-type products. The two stage process is especially adapted for on-demand manufacture of process cheese or process cheese-type product since the milk protein concentrate can be stored for later conversion to cheese product. By converting the milk to a storage-stable milk protein concentrate, the manufacturing of cheese products is uncoupled from, and is independent of, the milk supply.

It would be desirable, therefore, to produce solid milk products having low moisture levels as well as low fat/protein ratios. The present invention provides methods for producing such solid milk products.

### Summary of the Invention

The present invention provides a method of preparing a solid milk product having a moisture level of less than 40 percent and a fat/protein ratio of less than 2.5, and preferably a moisture level of 10 to 30 percent and a fat/protein ratio of less than 2.0. More preferably, the solid milk product has a fat/protein ratio of 0.5 to 1.5 and, even more preferably, 1 to 1.2. Generally, the solid milk product of the present invention has less than 50 percent added sweetener (e.g., sugar), preferably 12 to 35 percent added sweetener, and more preferably 25 to 35 percent added sweetener. Generally, the total sweetener (i.e., added sweetener plus sugars added with other ingredients) is less than 57 percent, preferably 25 to 52 percent, and more preferably 25 to 40 percent.

The solid milk product is a high solids, low moisture, high-protein, shelf-stable milk product which is solid at ambient temperatures. Thus, the product can be conveniently transported and consumed by hand. Moreover, the product can be produced in various forms - for example, solid bars, candy-type bars, cookies, cookies or bars with other ingredients (e.g., granola, grains, peanuts, other nuts, chocolate bits or chips, and the like), bite-sized forms or pieces, enrobed solid forms, shapes (e.g., animal, stars, letters), and the like - and can be produced with varying levels of sweetness. The product can also be produced in an aerated form.

The present invention provides a method for preparing a solid milk product, said method comprising:
(1) blending an aqueous liquid, an edible fat, and concentrated milk protein source at a temperature of 40 to 95°C and under high shear conditions with a bulk peak shear rate of greater than 950 sec⁻¹ to form a first blend, wherein the blending continues until essentially all components in the first blend are hydrated and wherein the edible fat has a melting point less than 50°C;
(2) adding 0 to 1 percent of an emulsifier to the first blend either before or after essentially all components in the first blend are hydrated;
(3) adding, once essentially all components in the first blend are hydrated, 0 to 3 percent of an emulsifying salt and 0 to 1 percent TiO₂ to form a second blend;
(4) continuing to heat the second blend to the temperature of 65 to 95°C under the high shear conditions until a homogeneous paste is obtained;
(5) pasteurizing the homogenous paste; and
(6) cooling the pasteurized homogenous paste to form the solid milk product,
   wherein the relative amount of the aqueous liquid, the edible fat, and the concentrated milk protein source in the first blend are adjusted such that the solid milk product has a moisture level of less than 40 percent and a fat/protein ratio of less than 2.5 and wherein the solid milk product is a solid at ambient temperatures.

The present invention also provides a method for preparing a solid milk product having a moisture level of less than 40 percent, said method comprising:
(1) blending an aqueous liquid, an edible fat, and concentrated milk protein source at a temperature of 40 to 95°C and under high shear conditions with a bulk peak shear rate of greater than 950 sec⁻¹ to form a first blend, wherein the blending continues until essentially all components in the first blend are hydrated and wherein the edible fat has a melting point less than 50°C;
(2) adding 0 to 1 percent of an emulsifier to the first blend either before or after essentially all components in the first blend are hydrated;
(3) added 0 to 3 percent of an emulsifying salt and 0 to 1 percent TiO₂ to the first blend to form a second blend; wherein, if the moisture level of the solid milk product is to be greater than 25 percent, the emulsifying salt and the TiO₂ are added to the first blend either before or after essentially all components in the first blend are hydrated; and wherein, if the moisture level of the solid milk product is to be less than 25 percent, the emulsifying salt and the TiO₂ are added to the first blend after essentially all components in the first blend are hydrated;
(4) continuing to heat the second blend to the temperature of 65 to 95°C under the high shear conditions until a homogeneous paste is obtained;
(5) pasteurizing the homogenous paste; and
(6) cooling the pasteurized homogenous paste to form the solid milk product,
   wherein the relative amount of the aqueous liquid, the edible fat, and the concentrated milk protein source in the first blend are adjusted such that the solid milk product has a moisture level of less than 40 percent and a fat/protein ratio of less than 2.5; and wherein the solid milk product is a solid at ambient temperatures.

In a preferred embodiment, the present invention provides a method for preparing a solid milk product, said method comprising:
(1) blending 20 to 50 percent condensed fat-free milk or sweetened condensed fat-free milk, 10 to 35 percent anhydrous milkfat, and 8 to 30 percent concentrated dry milk powder at a temperature of 40 to 95°C to form a first blend, wherein the blending continues until essentially all components in the first blend are hydrated;
(2) heating the first blend to a temperature of 60 to 95°C under high shear conditions with a bulk peak shear rate of greater than 950 sec⁻¹;
(3) adding 0 to 1 percent of an emulsifier to the first blend either before or after essentially all components in the first blend are hydrated;
(4) adding, once essentially all components in the first blend are hydrated, 1 to 3 percent of an emulsifying salt and 0.4 to 1 percent TiO₂ to the first blend to form a second blend;
(5) continuing to heat the second blend to the temperature of 65 to 95°C under the high shear conditions until a homogeneous paste is obtained;
(6) pasteurizing the homogenous paste; and
(7) cooling the pasteurized homogenous paste to form the solid milk product,
   wherein the solid milk product is a solid at ambient temperatures, has a moisture level of less than 40 percent, and has a fat/protein ratio of less than 2.5.

### Brief Description of the Drawings

Figure 1 provides a plot of moisture content versus fat/protein ratio comparing the solid milk product of the present invention with prior art products (i.e., Barta, U.S. Patent 4,497,834 (February 5, 1985) and Cillario, U.S. Patent 4,298,625 (November 3, 1981)).
Figure 2 is a flowchart illustrating the general process of the present invention. For solid milk products having a moisture level of greater than 25 percent, the TiO₂ and emulsifying salts can be added either before or after essentially all components are hydrated. For solid milk products having a moisture level of less than 25 percent, the TiO₂ and emulsifying salts should be added after essentially all components are hydrated.
Figure 3 is a flowchart illustrating a preferred embodiment of the process of the present invention wherein the TiO₂ and emulsifying salts are added after essentially all components are hydrated.
Figure 4 is a flowchart illustrating another preferred embodiment of the process of the present invention wherein the TiO₂ and emulsifying salts are added after essentially all components are hydrated.

### Detailed Description of the Invention

The present invention provides a method of preparing a solid milk product having a moisture level of less than 40 percent and a fat/protein ratio of less than 2.5, and preferably a moisture level of

10 to 30 percent and a fat/protein ratio of less than 2. More preferably, the solid milk product has a fat/protein ratio 0.5 to 1.5 and, even more preferably, 1 to 1.2. The solid milk product is a high solids, low moisture, high-protein, shelf-stable milk product which is solid at ambient temperatures. Thus, the product can be conveniently transported and consumed by hand. Moreover, the product can be produced in various forms - for example, solid bars, candy-type bars, cookies, cookies or bars with other ingredients (e.g., granola, grains, peanuts, other nuts, chocolate bits or chips, and the like), bite-sized forms or pieces, enrobed solid forms, shapes (e.g., animal, stars, letters), and the like - and can be produced with varying levels of sweetness. The product can also be produced in an aerated form.

The solid milk product contains an aqueous liquid; an edible fat; a concentrated milk protein source; 0 to 3 percent of an emulsifying salt; 0 to 1 percent TiO₂; 0 to 1 percent of an emulsifier; and 0 to . 50 percent non-lactose sweetener, wherein the solid milk product is a solid at ambient temperatures, has a moisture level of less than 40 percent and has a fat/protein ratio of less than 2.5. Preferably, the solid milk product has a moisture level of 10 to 30 percent and a fat/protein ratio of less than 2. More preferably, the solid milk product has a fat/protein ratio of. 0.5 to 1.5 and, even more preferably, 1 to 1.2. Suitable emulsifying salts include, for example, sodium citrate, potassium citrate, monosodium phosphate, disodium phosphate, trisodium phosphate, sodium aluminum phosphate, sodium tripolyphosphate, sodium hexametaphosphate, dipotassium phosphate, sodium acid pryrophosphate, and the like, as well as mixtures thereof. Sodium citrate, disodium phosphate, or mixtures thereof are the preferred emulsifying salts. Suitable emulsifiers include, for example, monoglycerides, diglycerides, polysorbates, sodium stearoyl lactylate, lecithin, and mixtures thereof as well as the like. Monoglycerides, diglycerides, sodium stearoyl lactylate, and mixtures thereof are the preferred emulsifiers. Preferably such emulsifiers are used in aerated solid milk products to improve the aeration process.

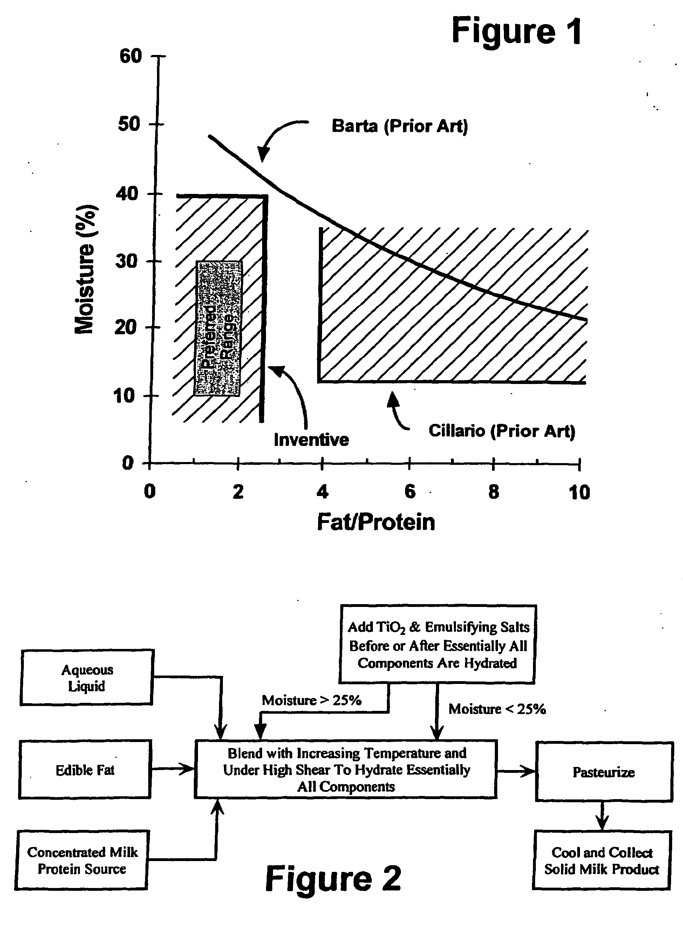

Figure 1 illustrates the relationship of the moisture level and the fat/protein level in the present solid milk product. Also included in Figure 1 are several prior art products which generally have significantly higher moisture levels and/or fat/protein ratios; these prior art products are described in the Background of the Invention above. Cross-hatching in Figure 1 generally indicates ranges of moisture and fat/protein ratio values for the specific products. As shown in Figure 1, the prior art has not been able to produce solid milk products having low moisture levels coupled with low fat/protein ratios as provided by the present invention.

A solid milk product contains 20 to 50 percent of an aqueous liquid (preferably condensed fat-free milk or sweetened condensed fat-free milk); 10 to 35 percent of an edible fat (preferably anhydrous milkfat); 8 to 30 percent of a concentrated milk protein source (preferably concentrated dry milk powder); 0 to 3 percent of an emulsifying salt (preferably sodium citrate, disodium phosphate, or mixtures thereof); 0 to 1 percent TiO₂; 0 to 1 percent emulsifier; and 0 to 50 percent non-lactose sweeteners. Typical formulations for solid milk product are provided in the following table:

| Component | General Range (%) | Preferred Range (%) | More Preferred Range (%) |
|---|---|---|---|
| Condensed Milk | 15 - 60 | 20 - 50 | 25 - 40 |
| Anhydrous Milkfat | 8 - 40 | 10 - 35 | 14 - 20 |
| Concentrated Dry Milk Powder | 1 - 45 | 8 - 30 | 12 - 25 |
| Emulsifying Salts | 0 - 3 | 1-2.5 | 1.5 - 2.5 |
| TiO₂ | 0 - 1 | 0.4 - 0.9 | 0.7 - 0.9 |
| Emulsifiers | 0 - 1 | 0.05 - 0.7 | 0.15 - 0.4 |
| Added Sweetener (non-lactose) | 0 - 50 | 12 - 35 | 25 - 35 |

Suitable emulsifying salts include, for example, sodium citrate, potassium citrate, monosodium phosphate, disodium phosphate, trisodium phosphate, sodium aluminum phosphate, sodium tripolyphosphate, sodium hexametaphosphate, dipotassium phosphate, sodium acid pyrophosphate, and the like, as well as mixtures thereof. Sodium citrate, disodium phosphate, or mixtures thereof are the preferred emulsifying salts. Suitable emulsifiers include, for example, monoglycerides, diglycerides, polysorbates, sodium stearoyl lactylate, lecithin, and mixtures thereof as well as the like. Monoglycerides, diglycerides, sodium stearoyl lactylate, and mixtures thereof are the preferred emulsifiers. Preferably such emulsifiers are used in aerated solid milk products. Suitable non-lactose sweeteners include, for example, sucrose, dextrose, fructose, glucose, maltose, honey, com syrup, non-nutritive sweeteners, and the like. Sucrose is generally preferred.

solid milk products are solid at ambient temperatures (i.e., 22 to 25°C), have moisture levels of less than 40 percent, and have fat/protein ratios of less than 2.5.

solid milk products have moisture levels of 10 to 30 percent and a fat/protein ratio of less than 2. solid milk product has a fat/protein ratio of 0.5 to 1.5 and; even 1 to 1.2. Generally, the firmness or penetration of the unaerated solid milk product is greater than 150 grams force, preferably 150 to 15,000 grams force, and more preferably 1000 to 10,000 grams force. Firmness can be measured using a universal testing machine in the penetration mode (e.g., Texture Technologies TA-XT2 using a 45° conical probe) or similar testing equipment. Generally, the overrun of the aerated solid milk product is 5 to 100 percent and more preferably 15 to 60 percent. Aerated solid milk products contain 0.05 to 0.7 percent emulsifier, or 0.15 to 0.4 percent emulsifier. solid milk products are shelf stable. Generally, the solid milk products shelf-lives of at least 3 months under ambient, non-refrigeration conditions and shelf-lives of at least 7 months under refrigeration conditions.

Figure 2 illustrates a general process for preparing solid milk product As shown in Figure 2, an aqueous liquid, an edible fat, and concentrated milk protein source are blended together. The relative amounts of the aqueous liquid, the edible fat, and concentrated milk protein source are adjusted to provide the desired moisture and fat/protein ratio in the solid milk product (i.e., moisture levels of less than 40 percent, preferably 10 to 30 percent, and fat/protein ratios of less than 2.5, preferably less than 2, more preferably 0.5 to 1.5 and even more preferably 1 to 1.2). Suitable aqueous liquids include, for example, water, flavored water, fruit juice, liquid fruit concentrate, condensed milk, sweetened condensed milk, condensed fat-free milk, sweetened condensed fat-free milk, ultrafiltered milk, ultrafiltered skim milk, ultrafiltered/diafiltered milk, ultrafiltered/diafiltered skim milk, and mixtures thereof as well as the like. Preferably, the aqueous liquid is condensed milk, sweetened condensed milk, condensed fat-free milk, sweetened condensed fat-free milk, ultrafiltered milk, or ultrafiltered skim milk. More preferably, the aqueous liquid is condensed milk or condensed fat-free milk having 30 to 35 percent solids or sweetened condensed milk or fat-free sweetened condensed milk having 70 to 75 percent solids. More preferably, the sweetened condensed milk contains 10 to 50 percent sweetener selected from the group consisting of sucrose, dextrose, fructose, glucose, maltose, and non-nutritive sweeteners. The preferred sweetener is sucrose. The added sugars or sweeteners can be added separately or via the sweetened condensed milk. Preferably the sweeteners are added via the sweetened condensed milks. If added as a separate component, they are preferably added at the same time as the initial components.

Suitable edible fats include, for example, butter, cream, anhydrous milkfat, vegetable fats, coco butter, and mixtures thereof as well as the like. The edible fat should generally have a melting point less than 50°C; more preferably, the edible fat has a melting point of 35 to 45°C. Preferably the edible fat is anhydrous milkfat. Preferably, the edible fat is melted prior to incorporation in the composition. Suitable concentrated milk protein sources include, for example, non-fat dry milk powder, milk protein concentrate, ultrafiltered milk protein concentrate, ultrafiltered/diafiltered milk protein concentrate, ultrafiltered milk protein paste, ultrafiltered/diafiltered milk protein paste, whey protein concentrate, and mixtures thereof as well as the like. Generally, the concentrated milk protein source is a dry powder having 40 to 92 percent milk protein and, more preferably, 65 to 85 milk protein. Preferred concentrated milk protein sources are concentrated dry milk powders such as, for example, non-fat dry milk powders and dry milk protein concentrate powders. The most preferred concentrated milk protein source is dry milk protein concentrate powder because of its generally low lactose level. It is generally preferred that the lactose in the moisture phase of the solid milk product (as measured by lactose (%)/moisture (%) x 100) of the present invention is below 19 percent and more preferably below 16 percent. If desired, the desired relatively low lactose levels can be obtained by using components having low levels of lactose (e.g., ultrafiltered or, ultrafiltered/diafiltered milk components) or by treatment of one or more of the components or the sold milk product itself with, for example, an enzyme (e.g., lactase) to reduce the lactose levels.

The initial components (i.e., aqueous liquid, edible fat, and concentrated milk protein source) are blended with increasing temperature under high shear conditions in order to hydrate essentially all lactose in the composition. For purposes of this invention, "high shear conditions" require a bulk peak shear of greater than 950 sec⁻¹; preferably the bulk peak shear is 1000 to 10,000 sec⁻¹. Blending and high shear continues until a homogenous paste is formed with essentially all components, including any lactose that may be present, are hydrated. For purposes of this invention, "essentially all components are hydrated" requires that at least 90 percent, and more preferably at least 95 percent, of the components, including lactose that may be present in the composition, are hydrated. As those skilled in the art will realize, the time required to obtain essentially complete hydration will vary depending on the relative amounts of the components, the amount of water present, and mixing conditions (e.g., applied shear and temperature). Generally, a mixing time of 1 to 10 minutes at a temperature of 70 to 75°C under high shear conditions is sufficient. In cases where sufficient hydration has not occurred, the low moisture solid milk product will tend to be "gritty." Of course, if such a gritty product is obtained, the blending or mixing time and/or the blending or mixing temperature can be increased.

Optional functional ingredients can be, and preferably are, incorporated into solid milk products These functional ingredients include emulsifying salts (preferably sodium citrate, disodium phosphate, and mixtures thereof), TiO₂, and, especially for aerated solid milk products, one or more emulsifiers such as monoglycerides, diglycerides, polysorbates, sodium stearoyl lactylate, and lecithin. Preferably at least one of these optional ingredients is incorporated into compositions ; more preferably, at least two of these optional ingredients are incorporated; even more preferably, especially if aerated solid milk products are desired, all of these just-listed optional ingredients are incorporated.

These optional functional ingredients are added to the first blend (i.e., aqueous liquid, an edible fat, and concentrated milk protein source) either before or after essentially all components in the first blend are hydrated. The particular timing of the addition of these optional function ingredients depends, at least in part, on the particular solid milk product being prepared. Generally, the emulsifier can be added either before or after essentially all components in the first blend are hydrated. The appropriate timing of the addition of the emulsifying salts and/or TiO₂, however, can vary depending on the total moisture level of the final solid milk product (see also Figure 2). If the moisture level of the solid milk product is to be greater than 25 percent, the emulsifying salts and/or the TiO₂ can be added to the first blend either before or after essentially all components in the first blend are hydrated. If, however, the moisture level of the solid milk product is to be less than 25 percent, the emulsifying salts and/or the TiO₂ should be added to the first blend after essentially all components in the first blend are hydrated. Generally, however and largely for process consideration, all of these optional functional ingredients are added after essentially all components in the first blend are hydrated.

TiO₂ acts as a whitener and also decreases the stretchability (i.e., less taffy like) of the solid milk product. Emulsifying salts generally improve textural properties. For example, sodium citrate generally provides better mouth-melting properties and disodium phosphate generally provides a firmer solid milk product. Suitable emulsifying salts include, for example, sodium citrate, potassium citrate, monosodium phosphate, disodium phosphate, trisodium phosphate, sodium aluminum phosphate, sodium tripolyphosphate, sodium hexametaphosphate, dipotassium phosphate, sodium acid pryrophosphate, and the like, as well as mixtures thereof. Sodium citrate, disodium phosphate, or mixtures thereof are the preferred emulsifying salts. The emulsifiers generally provide a smoother product; they also assist in preparing aerated solid milk products. Suitable emulsifiers include, for example, monoglycerides, diglycerides, polysorbates, sodium stearoyl lactylate, lecithin, and the like as well as mixtures thereof. Monoglycerides, diglycerides, sodium stearoyl lactylate, and mixtures thereof are the preferred emulsifiers.

Generally, the amounts of these optional ingredients are as follows: 0 to 3 percent emulsifying salts; 0 to 1 percent TiO₂; and 0 to 1 percent emulsifiers. Preferably, the amount of added emulsifying salts is 1 to 2.5 percent, the amount of added TiO₂ is 0.4 to 0.9 percent, and the amount of added emulsifiers is 0.05 to 0.7 percent. More preferably, the amount of added emulsifying salts is 1.5 to 2.5 percent, the amount of added TiO₂ is 0.7 to 0.9 percent, and the amount of added emulsifiers is 0.15 to 0.4 percent. Although added emulsifiers can be used in unaerated solid milk products, their use in aerated solid milk products is especially preferred.

Once these optional ingredients are added, blending under high shear conditions is continued until a homogenous paste is obtained. As those skilled in the art will realize, increasing the temperature during blending will decrease the time required to obtain the desired homogenous paste. Preferably, the temperature is increased up to : 80 to 90°C. After the homogenous paste is obtained, the mixture is pasteurized using conventional techniques and then cooled, preferably to below 40°C and more preferably below 10°C, to form the solid milk product. If desired, the mixture can be homogenized before cooling. The solid milk product can be collected and packaged using conventional techniques. For example, the solid milk product can be filled into various containers or formed into solid bars, candy-type bars, cookies, cookies or bars with other ingredients (e.g., granola, grains, peanuts, other nuts, chocolate bits or chips, and the like), bite-sized forms or pieces, enrobed solid forms, shapes (e.g., animal, stars, letters), and the like - and can be produced with varying levels of sweetness. Shapes that appeal to children are especially preferred. The product can also be produced in an aerated form.

If desired, other additives can be incorporated into the solid milk product so long as these additives do not interfere or adversely effect the desired properties (i.e., firmness, water level, fat/protein ratio, and the like). Such additives include, for example, flavorants, fruits, nuts, colorants, stabilizers, emulsifiers, preservatives, additional nutrients, vitamins, mineral supplements (e.g., calcium fortification), and the like. If included, these additives generally constitute less than 10 percent of the solid milk product. Such additives can be added either during the initial blending or after essentially all components have been hydrated. Preferably, solid additives are added during the high shear treatment and liquid additives are added during the initial blending. Of course, in cases where it is desired to maintain the physical integrity of the additives (e.g., fruit, nut, or grain pieces), the addition should be under low shear conditions only.

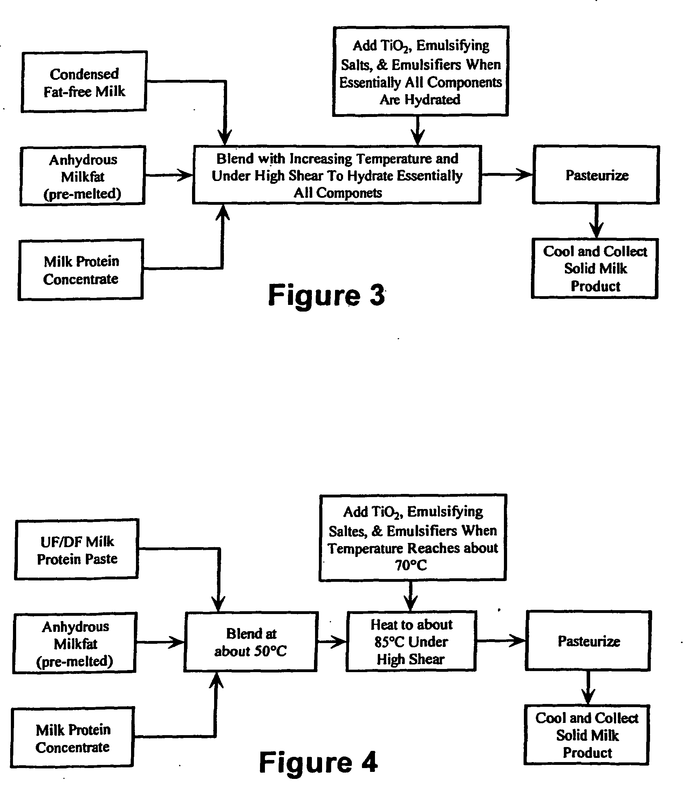

Figure 3 illustrates a preferred method for producing solid milk product . Condensed milk or sweetened condensed milk, pre-melted anhydrous milkfat, and non-fat dry milk powder are blended at 50°C and then heated up to 85°C under high shear conditions. Once essentially all the lactose is hydrated (generally by the time the temperature reaches 70°C), the desired levels of sodium citrate, disodium phosphate, TiO₂, and/or emulsifiers are added. Mixing under high shear conditions is continued until a homogenous paste is obtained; normally such a homogeneous paste is obtained by the time the temperature reaches 85°C. After pasteurization, homogenization (if desired), and cooling, the solid milk product can be collected and packaged.

The solid milk product can be aerated if desired using conventional aeration techniques. For example, after pasteurization the product can be aerated using a gas such as, for example, air, nitrogen, or carbon dioxide. Generally, the aerated milk product of this invention has a density of less than 9.5 g/ml as compared to 10 to 11 g/ml for the unaerated product. Aeration can be used to prepare solid milk products which resemble ice cream, yogurt, and the like. The following examples are included to illustrate the invention and not to limit it. Unless otherwise indicated, all percentages are by weight.

Example 1. A jacketed cooker equipped with a rotating agitator was heated to 130°C. 1.4 lbs [ 635 g] fat-free sweetened condensed milk, 0.3 lbs [ 136 g] anhydrous milkfat (pre-melted), and 0.3 lbs [ 136 g] non-fat dry milk powder were added to the cooker to form the base mixture. The temperature of the base mixture was allowed to rise from 50 to 85°C over a period of 5 minutes under high shear conditions. The high shear conditions were provided using the rotating agitator at 3000 rpm; the bulk peak shear was 1100 sec⁻¹. Once the temperature reached 85°C (i.e., after essentially all components are fully hydrated), 0.02 lbs [ 9 g] TiO₂ was added to the base mixture while maintaining high shear. Heating and high shear was continued until the temperature returned to 85°C. The product was pasteurized by holding the temperature at 85°C for 17 seconds. The consistency of the mixture was similar to a hot pudding. The resulting mixture was then cooled to below 45°C to form the solid milk product having 79 percent solids. The overall time from the initial heating step to cooling the final product was 10 minutes.

Typical analytical data for various solid milk products, along with comparable data for liquid milk, are provided below:

| | Typical Liquid Milk | Solid Milk (75% Solids) | Solid Milk (80% Solids) |
|---|---|---|---|
| Fat | -3.8% | 14.8% | 14.1% |
| Protein | -3.2% | 12.2% | 12.0% |
| Lactose | -4.6% | 18.3% | 18.1% |
| Added Sweetener | 0 | 24.7% | 32.6% |
| Moisture | -87% | 25.0% | 20.3% |

The resulting product was firm (i.e., self-supporting) and could be molded into a variety of shapes. Water activity was about 0.7 to about 0.81. The product was smooth, melted in the mouth, and had a pleasant milky flavor.
Comparative Example 2. A similar experiment as described in Example 1 was carried out except that the bulk peak shear rate was only about 880 sec-1 (corresponding to an agitator speed of about 2400 rpm). The resulting product was gritty and grainy and was not considered acceptable.
Comparative Example 3. A similar experiment as described in Example 1 was carried out except that the moisture level was adjusted to be less than about 25 percent and the TiO₂ was added to the base mixture before the components were fully hydrated. The resulting product was gritty and was not considered acceptable.

Example 4. Using essentially the same procedures as described in Example 1, about 1.7 Ibs [about 771 g] condensed skim milk (about 32 percent solids), about 0.66 Ibs anhydrous milkfat, about 0.5 Ibs [about 226 g] milk protein concentrate (Alapro 4700; New Zealand Milk Products), and about 1 lb [about 454 g] sucrose were mixed and heated to about 80°C over a period of about 10 minutes under high shear conditions. The high shear conditions were provided using a rotating agitator at about 3000 rpm; the bulk peak shear was about 1100 sec⁻¹. Once the temperature reached about 80°C (i.e., after essentially all components are fully hydrated), about 0.04 Ibs [about 18 g] TiO₂ and about 0.09 Ibs [about 41 g] sodium citrate were added. Heating under high shear was continued to about 85°C. The product was pasteurized by holding the temperature at about 85°F for about 30 seconds. The consistency of the mixture was similar to a hot process cheese. The resulting mixture was then cooled to below about 5°C to form the solid milk product having about 73 percent solids (i.e., moisture content of about 27 percent). The overall time from the initial heating step to cooling the final product was about 15 minutes. The resulting white solid milk product was firm (i.e., self-supporting), had a smooth, non-grainy texture, and dissolved rapidly in the mouth.

Example 5. Using essentially the same procedures as described in Example 1, 37.4 lbs [ 16.96 kg] sweetened condensed skim milk ( 72 percent solids), 5.6 lbs [ 2.54 kg] anhydrous milkfat, 5.0 lbs [ 2.27 kg] non-fat dry milk, and 0.08 lb [ .. 0.04 kg] monoglycerides and diglycerides (Dimodan) were mixed and heated to 74°C over a period of 5 minutes under high shear conditions. The high shear conditions were provided using a rotating agitator at 3000 rpm; the bulk peak shear was 1500 sec⁻¹. Once the temperature reached 80°C (i.e., after essentially all components are fully hydrated), 0.4 lbs [ 0.18 kg] TiO₂ and 1 lb [ 0.45 kg] sodium citrate were added. Heating under high shear was continued at 80°C for 10 minutes. The consistency of the mixture was similar to a hot process cheese. The resulting mixture was then aerated using a roto-stator type aeration device with nitrogen gas. The aerated mixture was then cooled to below 5°C to form the solid milk product having about 78 percent solids (i.e., moisture content of 22 percent) and an overrun of 16 to 20 percent. The overall time from the initial heating step to cooling the final product was 30 minutes. The aerated white solid milk product resembled ice cream in appearance, texture, and taste.

Example 6. Using essentially the same procedures as described in Example 1, 53 percent ultrafiltered whole milk (low lactose with a moisture of 55 percent), 40 percent corn syrup solids (24DE), 1 percent sodium citrate, 0.8 percent TiO₂, 0.7 percent salt, 4.5 percent glycerol, and 0.5 percent sodium stearoyl lactylate were blended to together and then subjected to a bulk peak shear of 1350 sec⁻¹ for 15 seconds. The resulting mixture was heated to 82°C over a 5 minute period. An unaerated solid milk product was obtained having 70 percent solids, 10.1 percent fat, 7.95 percent protein, 1.9 percent lactose, and 39.5 percent added sugars. The product was firm, white, high in dairy flavor, and not too sweet.

## Claims

1. A method for preparing a solid milk product, said method comprising:
blending an aqueous liquid, an edible fat, and concentrated milk protein source at a temperature of 40 to 95°C and under high shear conditions with a bulk peak shear rate of greater than 950 sec⁻¹ to form a first blend, wherein the blending continues until essentially all components in the first blend are hydrated and wherein the edible fat has a melting point less than 50°C;
(2) adding 0 to 1 percent of an emulsifier to the first blend either before or after essentially all components in the first blend are hydrated;
(3) adding, once essentially all components in the first blend are hydrated, 0 to 3 percent of an emulsifying salt and 0 to 1 percent TiO₂ to form a second blend;
(4) continuing to heat the second blend to the temperature of 65 to 95°C under the high shear conditions until a homogeneous paste is obtained;
(5) pasteurizing the homogenous paste; and
(6) cooling the pasteurized homogenous paste to form the solid milk product, wherein the relative amount of the aqueous liquid, the edible fat, and the concentrated milk protein source in the first blend are adjusted such that the solid milk product has a moisture level of less than 40 percent and a fat/protein ratio of less than 2.5 and wherein the solid milk product is a solid at ambient temperatures.

2. A method for preparing a solid milk product, said method comprising:
(1) blending 20 to 50 percent condensed fat-free milk or sweetened condensed fat-free milk, 10 to 35 percent anhydrous milkfat, and about 8 to 30 percent concentrated dry milk powder at a temperature of 40 to 95°C to form a first blend, wherein the blending continues until essentially all components in the first blend are hydrated;
(2) heating the first blend to a temperature of 60 to 95°C under high shear conditions with a bulk peak shear rate of greater than 950 sec⁻¹.
(3) adding 0 to 1 percent of an emulsifier to the first blend either before or after essentially all components in the first blend are hydrated;
(4) adding, once essentially all components in the first blend are hydrated, 1 to 3 percent of an emulsifying salt and: 0.4 to 1 percent TiO₂ to the first blend to form a second blend;
(5) continuing to heat the second blend to the temperature of 65 to 95°C under the high shear conditions until a homogeneous paste is obtained;
(6) pasteurizing the homogenous paste; and
(7) cooling the pasteurized homogenous paste to form the solid milk product,
wherein the solid milk product is a solid at ambient temperatures, has a moisture level of less than 40 percent, and has a fat/protein ratio of less than 2.5.

3. A method for preparing a solid milk product having a moisture level of less than 40 percent, said method comprising:
(1) blending an aqueous liquid, an edible fat, and concentrated milk protein source at a temperature of 40 to 95°C and under high shear conditions with a bulk peak shear rate of greater than 950 sec⁻¹ to form a first blend, wherein the blending continues until essentially all components in the first blend are hydrated and wherein the edible fat has a melting point less than 50°C;
(2) adding 0 to 1 percent of an emulsifier to the first blend either before or after essentially all components in the first blend are hydrated;
(3) added 0 to 3 percent of an emulsifying salt and 0 to 1 percent TiO₂ to the first blend to form a second blend; wherein, if the moisture level of the solid milk product is to be greater than 25 percent, the emulsifying salt and the TiO₂ are added to the first blend either before or after essentially all components in the first blend are hydrated; and wherein, if the moisture level of the solid milk product is to be less than 25 percent, the emulsifying salt and the TiO₂ are added to the first blend after essentially all components in the first blend are hydrated;
(4) continuing to heat the second blend to the temperature of 65 to 95°C under the high shear conditions until a homogeneous paste is obtained;
(5) pasteurizing the homogenous paste; and
(6) cooling the pasteurized homogenous paste to form the solid milk product,
wherein the relative amount of the aqueous liquid, the edible fat, and the concentrated milk protein source in the first blend are adjusted such that the solid milk product has a moisture level of less than 40 percent and a fat/protein ratio of less than 2.5; and wherein the solid milk product is a solid at ambient temperatures.

4. A method according to any one of claims 1 to 3, wherein the solid milk product has a moisture level of 10 to 30 percent and a fat/protein ratio of less than 2.

5. A method according to any one of claims 1 to 4, wherein the solid milk product has a moisture level of 10 to 30 percent and a fat/protein ratio of 0.5 to 1.5.

6. A method according to any one of claims 1 to 5, wherein the aqueous liquid is selected from water, flavored water, fruit juice, liquid fruit concentrate, condensed milk, sweetened condensed milk, condensed fat-free milk, sweetened condensed fat-free milk, ultrafiltered milk, ultrafiltered skim milk, ultrafiltered/diafiltered milk, ultrafiltered/diafiltered skim milk, and mixtures thereof; wherein the edible fat is selected from butter, cream, anhydrous milkfat, vegetable fats, coco butter, and mixtures thereof; and wherein the concentrated milk protein source is selected from non-fat dry milk powder, milk protein concentrate, ultrafiltered milk protein concentrate, ultrafiltered/diafiltered milk protein concentrate, ultrafiltered milk protein paste, ultrafiltered/diafiltered milk protein paste, whey protein concentrate, caseinates, and mixtures thereof.

7. A method according to any one of claims 1 to 6, wherein the solid milk product also contains an added sweetener at a level of up to 35 percent.

8. A method according to any one of claims 1 to 7, wherein the solid milk product also contains added sucrose at a level of up to 35 percent.

9. A method according to any one of claims 1 to 8, wherein the first blend comprises 20 to 50 percent condensed fat-free milk or sweetened condensed fat- free milk, 10 to 35 percent anhydrous milkfat, and 8 to 30 percent non-fat dry milk powder.

10. A method according to claim 9, wherein the first blend comprises 25 to 40 percent condensed fat-free milk or sweetened condensed fat- free milk, 14 to 20 percent anhydrous milkfat, and 12 to 25 percent non-fat dry milk powder.

11. A method according to claim 10, wherein the amount of added emulsifying salt is 1 to 2.5 percent and the amount of added TiO₂ is 0.4 to 0.9 percent.

12. A method according to claim 11, wherein the solid milk product is aerated and the amount of added emulsifier is 0.05 to 0.7 percent.

## Patentansprüche

1. Verfahren zur Herstellung eines festen Milchprodukts, bei dem man
eine wässrige Flüssigkeit, ein Speisefett und eine konzentrierte Milchproteinquelle bei einer Temperatur von 40 bis 95°C und unter hohen Scherbedingungen bei einer maximalen Volumenschergeschwindigkeit von mehr als 950 sec⁻¹ unter Bildung einer ersten Mischung mischt,
wobei die Mischung fortgesetzt wird, bis im wesentlichen alle Bestandteile in der ersten Mischung hydratisiert sind, und wobei das Speisefett einen Schmelzpunkt von weniger als 50°C hat,
(2) der ersten Mischung 0 bis 1 Prozent eines Emulgators zusetzt, bevor oder nachdem im wesentlichen alle Bestandteile in der ersten Mischung hydratisiert sind,
(3) 0 bis 3 Prozent eines emulgierenden Salzes und 0 bis 1 Prozent Ti0₂ unter Bildung einer zweiten Mischung zusetzt, sobald im wesentlichen alle Bestandteile in der ersten Mischung hydratisiert sind,
(4) die Erhitzung der zweiten Mischung auf die Temperatur von 65 bis 95°C unter den hohen Scherbedingungen fortsetzt, bis eine homogene Paste gebildet ist,
(5) die homogene Paste pasteurisiert und
(6) die pasteurisierte, homogene Paste unter Bildung des festen Milchprodukts kühlt, wobei die relative Menge der wässrigen Flüssigkeit, des Speisefetts und der konzentrierten Milchproteinquelle in der ersten Mischung so eingestellt wird, dass das feste Milchprodukt einen Feuchtigkeitsgehalt von weniger als 40 Prozent und ein Fett/Protein-Verhältnis von weniger als 2,5 hat und das feste Milchprodukt bei Umgebungstemperaturen ein Feststoff ist.

2. Verfahren zur Herstellung eines festen Milchprodukts, bei dem man
(1) 20 bis 50 Prozent kondensierte, fettfreie Milch oder gesüßte fettfreie Milch, 10 bis 35 Prozent wasserfreies Milchfett unt etwa 8 bis 30 Prozent konzentriertes Trockenmilchpulver bei einer Temperatur von 40 bis 95°C unter Bildung einer ersten Mischung mischt, wobei die Mischung fortgesetzt wird, bis im wesentlichen alle Bestandteile in der ersten Mischung hydratisiert sind,
(2) die erste Mischung unter hohen Scherbedingungen bei einer maximalen Volumenschergeschwindigkeit von mehr als 950 sec⁻¹ auf eine Temperatur von 60 bis 95°C erhitzt,
(3) der ersten Mischung 0 bis 1 Prozent eines Emulgators zusetzt, bevor oder nachdem im wesentlichen alle Bestandteile in der ersten Mischung hydratisiert sind,
(4) der ersten Mischung 1 bis 3 Prozent eines emulgierenden Salzes und 0,4 bis 1 Prozent Ti0₂ unter Bildung einer zweiten Mischung zusetzt, sobald im wesentlichen alle Bestandteile in der ersten Mischung hydratisiert sind,
(5) die Erhitzung der zweiten Mischung auf die Temperatur von 65 bis 95°C unter den hohen Scherbedingungen fortsetzt, bis eine homogene Paste gebildet ist,
(6) die homogene Paste pasteurisiert und
(7) die pasteurisierte, homogene Paste unter Bildung des festen Milchprodukts kühlt,
wobei das feste Milchprodukt bei Umgebungstemperaturen ein Feststoff ist, einen Feuchtigkeitsgehalt von weniger als 40 Prozent und ein Fett/Protein-Verhältnis von weniger als 2,5 hat.

3. Verfahren zur Herstellung eines festen Milchprodukts mit einem Feuchtigkeitsgehalt von weniger als 40 Prozent, bei dem man
(1) eine wässrige Flüssigkeit, ein Speisefett und eine konzentrierte Milchproteinquelle bei einer Temperatur von 40 bis 95°C und unter hohen Scherbedingungen bei einer maximalen Volumenschergeschwindigkeit von mehr als 950 sec⁻¹ unter Bildung einer ersten Mischung mischt,
wobei die Mischung fortgesetzt wird, bis im wesentlichen alle Bestandteile in der ersten Mischung hydratisiert sind, und wobei das Speisefett einen Schmelzpunkt von weniger als 50°C hat,
(2) der ersten Mischung 0 bis 1 Prozent eines Emulgators zusetzt, bevor oder nachdem im wesentlichen alle Bestandteile in der ersten Mischung hydratisiert sind,
(3) der ersten Mischung 0 bis 3 Prozent eines emulgierenden Salzes und 0 bis 1 Prozent TiO₂ unter Bildung einer zweiten Mischung zusetzt,
wobei das emulgierende Salz und das TiO₂ der ersten Mischung vor oder nach Hydratisierung im wesentlichen aller Bestandteile in der ersten Mischung zugesetzt werden, wenn der Feuchtigkeitsgehalt des festen Milchprodukts größer als 25 Prozent sein soll, und wobei das emulgierende Salt und das TiO₂ der ersten Mischung nach Hydratisierung im wesentlichen aller Bestandteile in der ersten Mischung zugesetzt werden, wenn der Feuchtigkeitsgehalt des festen Milchprodukts weniger als 25 Prozent sein soll,
(4) die Erhitzung der zweiten Mischung auf die Temperatur von 65 bis 95°C unter den hohen Scherbedingungen fortsetzt, bis eine homogene Paste gebildet ist,
(5) die homogene Paste pasteurisiert und
(6) die pasteurisierte homogene Paste unter Bildung des festen Milchprodukts kühlt,
wobei die relative Menge der wässrigen Flüssigkeit, des Speisefetts und der konzentrierten Milchproteinquelle in der ersten Mischung so eigestellt wird, dass das feste Milchprodukt einen Feuchtigkeitsgehalt von weniger als 40 Prozent und ein Fett/Protein-Verhältnis von weniger als 2,5 hat und das feste Milchprodukt bei Umgebungstemperaturen ein Feststoff ist.

4. Verfahren nach einem der Ansprüche 1 bis 3, bei dem das feste Milchprodukt einen Feuchtigkeitsgehalt von 10 bis 30 Prozent und ein Fett/Protein-Verhältnis von weniger als 2 hat.

5. Verfahren nach einem der Ansprüche 1 bis 4, bei dem das feste Milchprodukt einen Feuchtigkeitsgehalt von 10 bis 30 Prozent und ein Fett/Protein-Verhältnis von 0,5 bis 1,5 hat.

6. Verfahren nach einem der Ansprüche 1 bis 5, bei dem die wässrige Flüssigkeit unter Wasser, mit Gesehmacksstoff versehenem Wasser, Fruchtsaft, flüssigem Fruchtkonzentrat, kondensierter Milch, gesüßter, kondensierter Milch, fettfreier kondensierter Milch, gesüßter, kondensierter fettfreier Milch, ultrafiltrierter Milch, ultrafiltrierter entrahmter Milch, ultrafiltrierter/diafiltrierter Milch, ultrafiltrierter/diafiltrierter entrahmter Milch und deren Gemischen ausgewählt wird, bei dem das Speisefett unter Butter, Rahm, wasserfreiem Milchfett, pflanzlichen Fetten, Kokosbutter und deren Gemischen ausgewählt wird und bei dem die konzentrierte Milchproteinquelle unter fettfreiem Trockenmilchpulver, Milchproteinkonzentrat, ultrafiltriertem Milchproteinkonzentrat, ultrafiltriertem/diafiltriertem Milchproteinkonzentrat, ultrafiltrierter Milchproteinpaste, ultrafiltrierter/diafiltrierter Milchproteinpaste, Molkenproteinkonzentrat, Kaseinaten und deren Gemischen ausgewählt wird.

7. Verfahren nach einem der Ansprüche 1 bis 6, bei dem das feste Milchprodukt auch ein zugesetztes Süßungsmittel in einem Gehalt von bis zu 35 Prozent enthält.

8. Verfahren nach einem der Ansprüche 1 bis 7, bei dem das feste Milchprodukt auch zugesetzte Sucrose in einem Gehalt von bis zu 35 Prozent enthält.

9. Verfahren nach einem der Ansprüche 1 bis 8, bei dem die erste Mischung 20 bis 50 Prozent kondensierte fettfreie Milch oder gesüßte kondensierte fettfreie Milch, 10 bis 35 Prozent wasserfreies Milchfett und 8 bis 30 Prozent fettfreies Trockenmilchpulver umfaßt.

10. Verfahren nach Anspruch 9, bei dem die erste Mischung 25 bis 40 Prozent kondensierte fettfreie Milch oder gesüßte kondensierte fettfreie Milch, 14 bis 20 Prozent wasserfreies Milchfett und 12 bis 25 Prozent fettfreies Trockenmilchpulver umfaßt.

11. Verfahren nach Anspruch 10, bei dem die Menge des zugesetzten emulgierenden Salzes 1 bis 2,5 Prozent und die Menge des zugesetzten TiO₂ 0,4 bis 0,9 Prozent beträgt.

12. Verfahren nach Anspruch 11, bei dem das feste Milchprodukt lufthaltig ist und die Menge des zugesetzten Emulgators 0,05 bis 0,7 Prozent beträgt.

## Revendications

1. Procédé de préparation d'un produit laitier solide, ledit procédé comprenant :
le mélange d'un liquide aqueux, d'une matière grasse alimentaire et d'une source de protéines de lait concentré à une température de 40 à 95 °C et dans des conditions de cisaillement important avec un taux de cisaillement volumique maximal supérieur à 950 s⁻¹ de manière à former un premier mélange, ledit mélange se poursuivant jusqu'à ce qu'essentiellement tous les composants présents dans le premier mélange soient hydratés et ladite matière grasse alimentaire présentant un point de fusion inférieur à 50 °C ;
(2) l'ajout de 0 à 1 pour cent d'un émulsifiant au premier mélange soit avant soit après qu'essentiellement tous les composants présents dans le premier mélange soient hydratés ;
(3) l'ajout, une fois qu'essentiellement tous les composants présents dans le premier mélange sont hydratés, de 0 à 3 pour cent d'un sel émulsionnant et de 0 à 1 pour cent de TiO₂ de manière à former un second mélange ;
(4) la continuation du chauffage du second mélange jusqu'à une température de 65 à 95 °C dans les conditions de cisaillement important jusqu'à ce qu'une pâte homogène soit obtenue ;
(5) la pasteurisation de la pâte homogène ; et
(6) le refroidissement de la pâte homogène pasteurisée de manière à former le produit laitier solide, dans lequel la quantité relative du liquide aqueux, de la matière grasse alimentaire et de la source de protéines de lait concentré dans le premier mélange est ajustée de manière à ce que le produit laitier solide présente un niveau d'humidité inférieur à 40 pour cent et un rapport matières grasses/protéines inférieur à 2,5 et
dans lequel le produit laitier solide est une matière solide à des températures ambiantes.

2. Procédé de préparation d'un produit laitier solide, ledit procédé comprenant :
(1) le mélange de 20 à 50 pour cent de lait concentré sans matières grasses ou de lait concentré sucré sans matières grasses, de 10 à 35 pour cent de matière grasse laitière anhydre et d'environ 8 à 30 pour cent de lait en poudre sec concentré à une température de 40 à 95 °C de manière à former un premier mélange, ledit mélange se poursuivant jusqu'à ce qu'essentiellement tous les composants présents dans le premier mélange soient hydratés ;
(2) le chauffage du premier mélange jusqu'à une température de 60 à 95 °C dans des conditions de cisaillement important avec un taux de cisaillement volumique maximal supérieur à 950 s⁻¹ ;
(3) l'ajout de 0 à 1 pour cent d'un émulsifiant au premier mélange soit avant soit après qu'essentiellement tous les composants présents dans le premier mélange soient hydratés ;
(4) l'ajout, une fois qu'essentiellement tous les composants présents dans le premier mélange sont hydratés, de 1 à 3 pour cent d'un sel émulsionnant et de 0,4 à 1 pour cent de TiO₂ au premier mélange de manière à former un second mélange ;
(5) la continuation du chauffage du second mélange jusqu'à une température de 65 à 95 °C dans les conditions de cisaillement important jusqu'à ce qu'une pâte homogène soit obtenue ;
(6) la pasteurisation de la pâte homogène ; et
(7) le refroidissement de la pâte homogène pasteurisée de manière à former le produit laitier solide,
dans lequel le produit laitier solide est une matière solide à des températures ambiantes, présente un niveau d'humidité inférieur à 40 pour cent et un rapport matières grasses/protéines inférieur à 2,5.

3. Procédé de préparation d'un produit laitier solide présentant un niveau d'humidité inférieur à 40 pour cent, ledit procédé comprenant :
(1) le mélange d'un liquide aqueux, d'une matière grasse alimentaire et d'une source de protéines de lait concentré à une température de 40 à 95 °C et dans des conditions de cisaillement important avec un taux de cisaillement volumique maximal supérieur à 950 s⁻¹ de manière à former un premier mélange, ledit mélange se poursuivant jusqu'à ce qu'essentiellement tous les composants présents dans le premier mélange soient hydratés et ladite matière grasse alimentaire présentant un point de fusion inférieur à 50 °C ;
(2) l'ajout de 0 à 1 pour cent d'un émulsifiant au premier mélange soit avant soit après qu'essentiellement tous les composants présents dans le premier mélange soient hydratés ;
(3) l'ajout de 0 à 3 pour cent d'un sel émulsionnant et de 0 à 1 pour cent de TiO₂ au premier mélange de manière à former un second mélange ; dans lequel, si le niveau d'humidité du produit laitier solide doit être supérieur à 25 pour cent, le sel émulsionnant et le TiO₂ sont ajoutés au premier mélange soit avant soit après qu'essentiellement tous les composants présents dans le premier mélange soient hydratés ; et dans lequel, si le niveau d'humidité du produit laitier solide doit être inférieur à 25 pour cent, le sel émulsionnant et le TiO₂ sont ajoutés au premier mélange après qu'essentiellement tous les composants présents dans le premier mélange soient hydratés ;
(4) la continuation du chauffage du second mélange jusqu'à une température de 65 à 95 °C dans les conditions de cisaillement important jusqu'à ce qu'une pâte homogène soit obtenue ;
(5) la pasteurisation de la pâte homogène ; et
(6) le refroidissement de la pâte homogène pasteurisée de manière à former le produit laitier solide,
dans lequel la quantité relative du liquide aqueux, de la matière grasse alimentaire et de la source de protéines de lait concentré dans le premier mélange est ajustée de manière à ce que le produit laitier solide présente un niveau d'humidité inférieur à 40 pour cent et un rapport matières grasses/protéines inférieur à 2,5 ; et dans lequel le produit laitier solide est une matière solide à des températures ambiantes.

4. Procédé selon l'une quelconque des revendications 1 à 3, dans lequel le produit laitier solide présente un niveau d'humidité de 10 à 30 pour cent et un rapport matières grasses/protéines inférieur à 2.

5. Procédé selon l'une quelconque des revendications 1 à 4, dans lequel le produit laitier solide présente un niveau d'humidité de 10 à 30 pour cent et un rapport matières grasses/protéines de 0,5 à 1,5.

6. Procédé selon l'une quelconque des revendications 1 à 5, dans lequel le liquide aqueux est choisi parmi l'eau, l'eau aromatisée, le jus de fruits, le concentré de fruit le lait le lait concentré sucré, le lait concentré sans matières grasses, le lait concentré sucré sans matières grasses, le lait ultrafiltré, le lait écrémé ultrafiltré, le lait ultrafiltré/diafiltré, le lait écrémé ultrafiltré/diafiltré et les mélanges de ceux-ci ; dans lequel la matière grasse alimentaire est choisie parmi le beurre, la crème, la matière grasse laitière anhydre, les matières grasses végétales, le beurre de cacao et les mélanges de ceux-ci ; et dans lequel la source de protéines de lait concentré est choisie parmi le lait en poudre sec sans matières grasses, le concentré de protéines de lait, le concentré de protéines de lait ultrafiltré, le concentré de protéines de lait ultrafiltré/diafiltré, la pâte de protéines de lait ultrafiltré, la pâte de protéines de lait ultrafiltré/diafiltré, le concentré de protéines de sérum, les caséinates et les mélanges de ceux-ci.

7. Procédé selon l'une quelconque des revendications 1 à 6, dans lequel le produit laitier solide contient également un édulcorant ajouté à un niveau allant jusqu'à 35 pour cent.

8. Procédé selon l'une quelconque des revendications 1 à 7, dans lequel le produit laitier solide contient également du saccharose ajouté à un niveau allant jusqu'à 35 pour cent.

9. Procédé selon l'une quelconque des revendications 1 à 8, dans lequel le premier mélange comprend 20 à 50 pour cent de lait concentré sans matières grasses ou de lait concentré sucré sans matières grasses, 10 à 35 pour cent de matière grasse laitière anhydre et 8 à 30 pour cent de lait en poudre sec sans matières grasses.

10. Procédé selon la revendication 9, dans lequel le premier mélange comprend 25 à 40 pour cent de lait concentré sans matières grasses ou de lait concentré sucré sans matières grasses, 14 à 20 pour cent de matière grasse laitière anhydre et 12 à 25 pour cent de lait en poudre sec sans matières grasses.

11. Procédé selon la revendicalion 10, dans lequel la quantité de sel émulsionnant ajouté est de 1 à 2,5 pour cent et la quantité de TiO₂ ajouté est de 0,4 à 0,9 pour cent.

12. Procédé selon la revendication 11, dans lequel le produit laitier solide est aéré et la quantité d'émulsifiant ajouté est de 0,05 à 0,7 pour cent.
